# EUROPEAN PATENT APPLICATION

(11) **EP 2 763 012 A1**
(43) Date of publication of application: **06.08.2014**
(21) Application number: 12836676.2
(22) Date of filing: 07.08.2012
(51) Int. Cl.: G06F 3/048

(54) **DISPLAY DEVICE**

(30) Priority: 26.09.2011 JP 2011208975
(71) Applicant: NEC CASIO Mobile Communications, Ltd., Kawasaki-shi, Kanagawa 211-8666 (JP)
(72) Inventor: MURAYAMA, Atsuhiko, Kawasaki-shi Kanagawa 211-8666 (JP); AOKI, Hiroyuki, Kawasaki-shi Kanagawa 211-8666 (JP)
(74) Representative: Vossius & Partner
(86) International application number: PCT/JP2012/070042
(87) International publication number: WO 2013/046935

(57) **Abstract**

When detection section (120) detects touch in display area (110-1) or (110-2), and positions at start and end of the touch detected by detection section (120) are included in different display areas (110-1) and (110-2), control section (130) causes second information related to first information displayed at a position corresponding to the position where detection section (120) has detected the start of the touch to be displayed at a position corresponding to the position where detection section (120) has detected the end of the touch.

## Description

### Technical Field

The present invention relates to a display apparatus, a display method and a program for displaying information.

### Background Art

Recently, on electronic equipment mounted with a display for displaying information (hereinafter referred to as a display apparatus), various information is displayed. Among such display apparatuses, a display apparatus is devised which is composed of multiple thin display media and can be used as a book (for example, see Patent Literature 1).

### Citation List

### Patent Literature

Patent Literature 1: JP2003-58081A

### Summary of Invention

### Technical Problem

However, in the technique described above, in order to view information related to information displayed on the display, it is necessary to connect to a search site or the like and input the information as a search key to search for and display the related information, or manually or visually look for the information displayed on another display medium. Therefore, there is a problem that time and efforts are required therefor.

An object of the present invention is to provide a display apparatus, a display method and a program which solve the problem described above.

### Solution to Problem

A display apparatus of the present invention includes:
mutually adjacent display areas;
a detection section that detects touch in the display areas; and
a control section that causes, if positions at start and end of the touch detected by the detection section are included in different display areas, second information related to first information displayed at a position corresponding to the position where the start of the touch is detected by the detection section, to be displayed at a position corresponding to the position where the end of the touch is detected by the detection section.

A display method of the present invention comprises the processes of:
detecting touch in mutually adjacent display areas; and
causing, if positions at start and end of the detected touch are included in different display areas, second information related to first information displayed at a position corresponding to the position where the start of the touch is detected ,to be displayed at a position corresponding to the position where the end of the touch is detected.

A program of the present invention is
a program for causing a display apparatus including mutually adjacent display areas to execute the procedures of:
detecting touch in the display area; and
causing, if positions at start and end of the detected touch are included in different display areas, second information related to first information displayed at a position corresponding to the position where the start of the touch is detected to be displayed at a position corresponding to the position where the end of the touch is detected.

### Advantageous Effects of Invention

As described above, it is possible to easily display information related to displayed information, in the present invention.

### Brief Description of Drawings

Figure 1 is a diagram showing a first exemplary embodiment of a display apparatus of the present invention.
Figure 2 is a diagram showing an example of association between first information and second information stored in a storage section shown in Figure 1.
Figure 3 is a diagram showing a first example of the appearance of the display apparatus shown in Figure 1.
Figure 4 is a diagram showing a second example of the appearance of the display apparatus shown in Figure 1.
Figure 5 is a flowchart for illustrating a display method in the display apparatus shown in Figure 1.
Figure 6 is a diagram showing an example of a state at the time when a detection section shown in Figure 1 detects start of the touch on a display area.
Figure 7 is a diagram showing an example of a state at the time when the detection section shown in Figure 1 detects end of the touch in a display area.
Figure 8 is a diagram showing an example of a state in which two pieces of information are displayed in the display area shown in Figure 1.
Figure 9 is a diagram showing an example of a state at the time when the detection section shown in Figure 1 detects start of the touch of two points on the display area.
Figure 10 is a diagram showing an example of a state at the time when the detection section shown in Figure 1 detects end of the touch of the two pints in the display area.
Figure 11 is a diagram showing a second exemplary embodiment of the display apparatus of the present invention.
Figure 12 is a flowchart for illustrating a display method in the display apparatus shown in Figure 11.

### Description of Embodiments

Exemplary embodiments will be described below with reference to drawings.

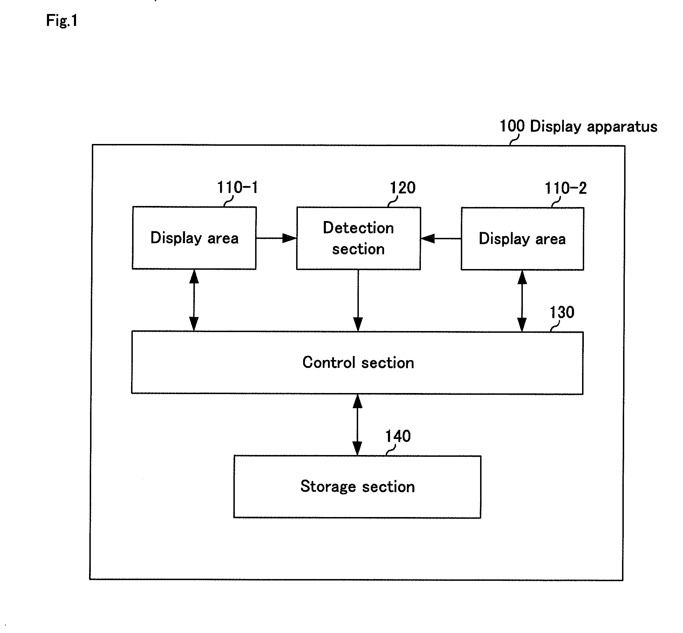

Figure 1 is a diagram showing a first exemplary embodiment of a display apparatus of the present invention.

Display apparatus 100 in the present exemplary embodiment is provided with display areas 110-1 and 110-2, detection section 120, control section 130 and storage section 140 as shown in Figure 1. Figure 1 shows only components related to the present invention among components provided for display apparatus 100. Though a case where there are two display areas is shown as an example in Figure 1, there may be three or more display areas.

In display areas 110-1 and 110-2, information such as an image or characters (text) is displayed. Display areas 110-1 and 110-2 may be areas which are arranged physically on one display or may be areas which are mutually physically separated from each other. However, display areas 110-1 and 110-2 are arranged mutually adjacent to each other. Here, being "adjacent" means not only a case where display areas 110-1 and 110-2 are completely in contact with each other but also a case where display areas 110-1 and 110-2 are arranged side by side with a predetermined width space therebetween.

Detection section 120 detects touch or approach of an object, such as a finger, on or to display area 110-1 or 110-2.

Control section 130 causes information to be displayed in display areas 110-1 and 110-2. Control section 130 judges, on the basis of positional change of a touched area or an approached area on each display area detected by detection section 120, whether or not the change of the area is continuous area movement across the display areas. If it is judged that the change is based on a continuous operation across the boundary between display areas 110-1 and 110-2, control section 130 causes second information (such as text and an image) related to first information (such as text and an image) displayed at a position corresponding to a position where detection section 120 has detected start of the touch to be displayed at a position corresponding to a position where detection section 120 has detected end of the touch. That is, if a display area which includes the position where detection section 120 has detected the start of the touch is different from a display area which includes the position where detection section 120 has detected the end of the touch, control section 130 causes the second information related to the first information displayed at the position corresponding to the position where detection section 120 has detected the start of the touch (being included in the position where detection section 120 has detected the start of the touch) to be displayed at the position corresponding to the position where detection section 120 has detected the end of the touch. Hereinafter, the position where detection section 120 detects that touch or approach has been started will be referred to as a start position, and the position where, after a continuous operation is next performed across the display areas, detection section 120 detects the touch or the approach has been ended will be referred to as an end position. At this time, control section 130 reads out the second information related to the first information from storage section 140 and causes it to be displayed.

Furthermore, in the case of causing a map to be displayed as the second information in the display area which includes an end position detected by detection section 120, control section 130 causes the map to be displayed in a manner such that a display position on the map related to the first information is included on the end position or within an area around the end position.

If there are two start positions and two end positions, control section 130 causes information showing a mutual relationship between pieces of information displayed at the two positions, which are the respective start positions, or around the positions to be displayed at positions corresponding to the end positions.

The information showing the mutual relationship between the pieces of information displayed at the two positions may be, for example, if "Ueno Station" and "Tokyo Station" are displayed as the first information at the two start positions, respectively, information showing a train route from "Ueno Station" as a departure place to "Tokyo Station" as a destination place (a transfer guide), map information showing a map between "Ueno Station" and "Tokyo Station" or information comparing time required by each traffic means from "Ueno station" to "Tokyo Station," as information to be displayed in the display area which includes the end positions. At this time, in the case of causing a map to be displayed in the display area which includes the end positions as the second information, control section 130 causes the map to be displayed in a manner such that positions on the map related to the pieces of information displayed at the positions corresponding to the two points which are the start positions, respectively, are positions corresponding to the positions of the two points which are the end positions. Details thereof will be described later.

Additionally, for example, if information showing "Ichiro" and information showing "Hideki Matsui" are displayed at the two positions where detection section 120 has detected the touch, respectively, the information showing the mutual relationship may be information comparing this year's batting averages, the numbers of home runs, the numbers of games played and the like of the players.

Here, the information showing "Ichiro" and the information showing "Hideki Matsui" may be text data of the names themselves, image information showing the persons, areas in which information articles such as news are displayed.

An information classification specified on the display area for displaying the second information may be referred to as identification information for specifying the information showing the mutual relationship. That is, the information such as each player's batting average and the number of home runs shown as an example of the second information may be information obtained by extracting and displaying information stored in association with the first information and an information classification specified on the display area for displaying the second information when the first information is selected as a start position. With the classification of the information displayed last used as identification information, information related to the first information stored in storage section 140 and the identification information may be extracted and displayed. For example, if the classification of information displayed by the latest user operation in the past on the display area for displaying the second information is this year's news information about the person, then current topics information such as news information is specified as the identification information. Then, current topics information or article information related to the person is acquired and displayed. If it is judged by the latest user operation that a person has been specified as the first information, the person and this year's batting average and the number of home runs, the number of games played and the like held in storage section 140 in association with results information are displayed.

As described above, if an information classification specified on the display area for displaying the second information exists in advance, information corresponding to the classification can be displayed even if there is no identification information specified by the latest user operation. For example, when a program or application program for displaying an image is being executed on the display area, image information about the person is acquired and displayed.

In order to perform the process described above, control section 130 acquires second information corresponding to first information, from storage section 140. Therefore, it is assumed that the first information and the second information described above are stored in association with each other in storage section 140 in advance. Here, the second information is not limited to the information held in storage section 140. Such second information that is based on the classification of information specified on the display area for displaying second information corresponding to the first information may be acquired by communication section 150 via a network. Here, a case where the second information is mainly stored in storage section 140 will be shown as an example.

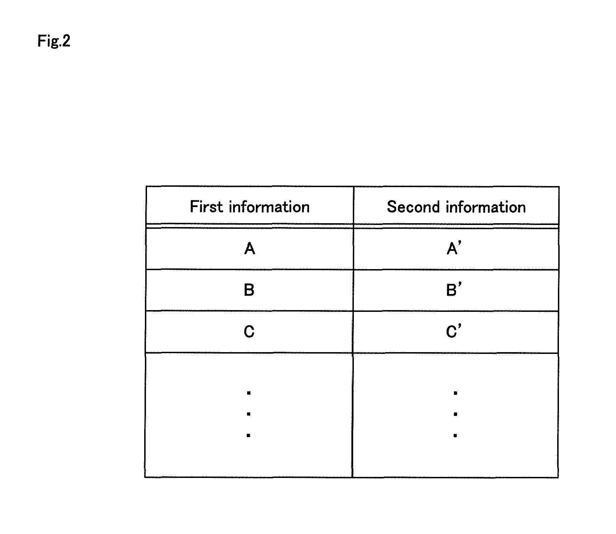

Figure 2 is a diagram showing an example of association between the first information and the second information stored in storage section 140 shown in Figure 1.

In storage section 140 shown in Figure 1, the first information and the second information are stored in association with each other as shown in Figure 2.

For example, as shown in Figure 2, first information "A" and second information "A"' are stored in association with each other. This indicates that, if the positions at start and end of touch detected by detection section 120 are included in different display areas, and if information displayed at a position corresponding to the position where detection section 120 has detected the start of the touch is "A," information which control section 130 causes to be displayed at a position corresponding to the position where detection section 120 has detected the end of the touch is "A'." First information "B" and second information "B"' are also stored in association with each other. This indicates that, if the positions at start and end of touch detected by detection section 120 are included in different display areas, and if information displayed at a position corresponding to the position where detection section 120 has detected the start of the touch is "B," information which control section 130 causes to be displayed at a position corresponding to the position where detection section 120 has detected the end of the touch is "B'." First information "C" and second information "C"' are also stored in association with each other. This indicates that, if the positions at start and end of touch detected by detection section 120 are included in different display areas, and if information displayed at a position corresponding to the position where detection section 120 has detected the start of the touch is "C," information which control section 130 causes to be displayed at a position corresponding to the position where detection section 120 has detected the end of the touch is "C'."

The first information and the second information will be described below by giving examples. Any data, such as text data, image data and map data, may be used if the data can be displayed in display areas 110-1 and 110-2.

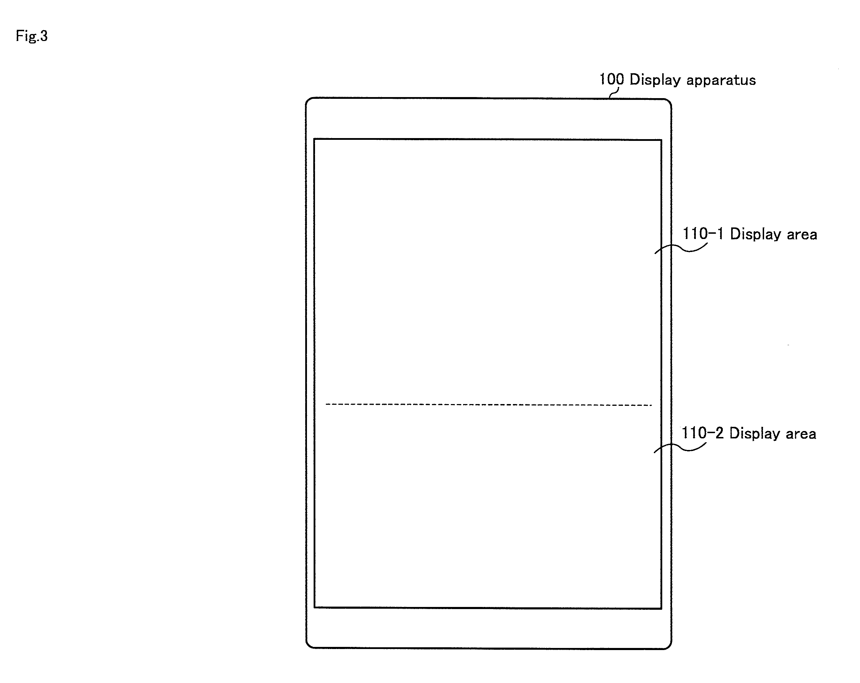

Figure 3 is a diagram showing a first example of the appearance of display apparatus 100 shown in Figure 1.

In display apparatus 100 shown in Figure 1, two display areas 110-1 and 110-2 are arranged on physically one display as shown in Figure 3. A boundary between display areas 110-1 and 110-2 (what is indicated by a broken line in Figure 3) only has to be recognized by an operator operating display apparatus 100 and is not especially specified. For example, the boundary may be something like a boundary between a field for displaying an inputted sentence and a field for displaying conversion candidates which are displayed on a display at the time of inputting the body of an e-mail on a mobile terminal.

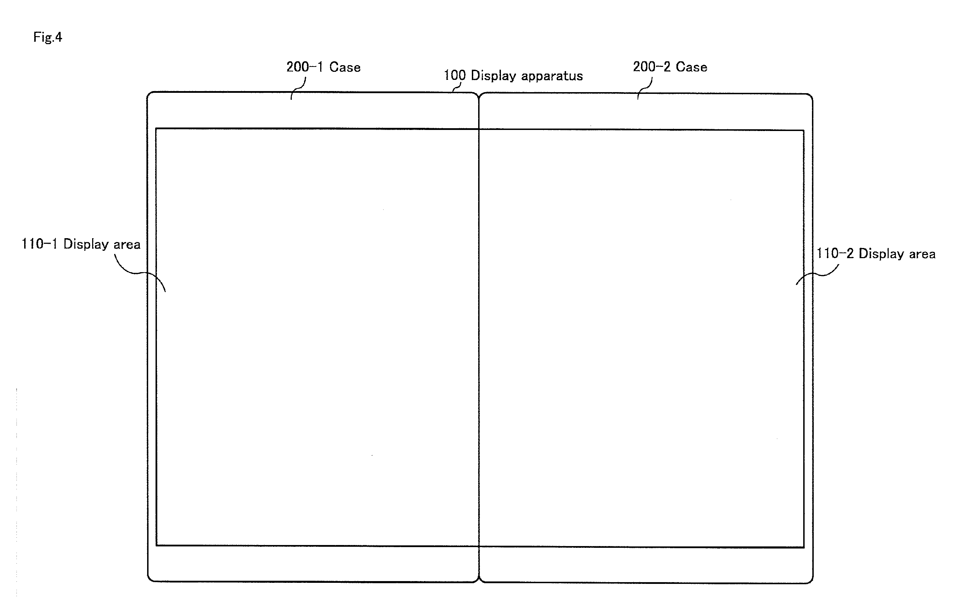

Figure 4 is a diagram showing a second example of the appearance of display apparatus 100 shown in Figure 1.

In display apparatus 100 shown in Figure 1, display areas 110-1 and 110-2 are arranged such that they are physically separated as shown in Figure 4. At this time, display areas 110-1 and 110-2 may be arranged on the same case or may be arranged on different cases 200-1 and 200-2 connected with a hinge or the like as shown in Figure 4.

A display method in display apparatus 100 shown in Figure 1 will be described below.

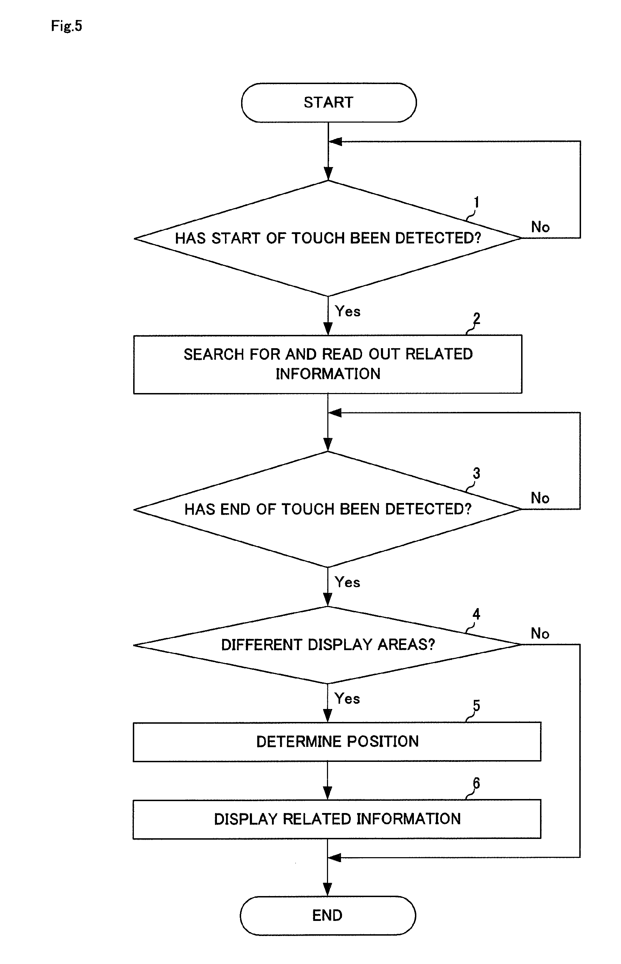

Figure 5 is a flowchart for illustrating the display method in display apparatus 100 shown in Figure 1.

First, at step 1, it is judged whether or not detection section 120 has detected start of touch of a touching object, such as a finger, on a display area.

If detection section 120 detects the start of the touch on the display area, control section 130 searches for and reads out, with first information displayed at a position corresponding to the position where the start of the touch has been detected as a search key, second information related to the first information from associations stored in storage section 140 at step 2.

After that, at step 3, it is judged whether or not detection section 120 has detected end of the touch. That is, detection section 120 judges whether or not the touching object, such as a finger, touching the display area has left the display area.

If detection section 120 detects the end of the touch on the display area, control section 130 judges whether or not a position where the end of the touch has been detected is a position included in a display area different from the display area which includes the position where the start of the touch has been detected, at step 4.

If the position where detection section 120 has detected the end of the touch is not a position included in a display area different from the display area which includes the position where the start of the touch has been detected, the process ends without doing anything.

On the other hand, if the position where detection section 120 has detected the end of the touch is a position included in a display area different from the display area which includes the position where the start of the touch has been detected, control section 130 determines the position where detection section 120 has detected the end of the touch as an end position, that is, a position where the second information is to be displayed, at step 5.

Then, at step 6, control section 130 causes the second information to be displayed at a position corresponding to the determined position.

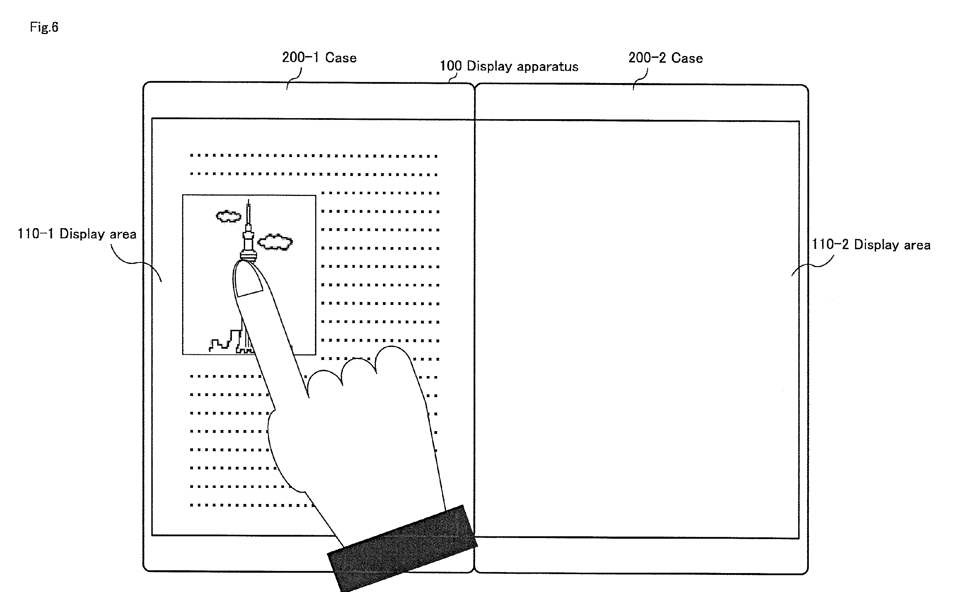

Figure 6 is a diagram showing an example of a state at the time when detection section 120 shown in Figure 1 detects start of the touch on display area 110-1. Description will be made with a case where display apparatus 100 has an appearance as shown in Figure 4 given as an example (the same applies hereinafter).

As shown in Figure 6, when detection section 120 detects the start of the touch at a position where Tokyo Skytree is displayed in a state in which an article which includes an image of Tokyo Skytree is being displayed in display area 110-1, control section 130 searches storage section 140 for information related to Tokyo Skytree.

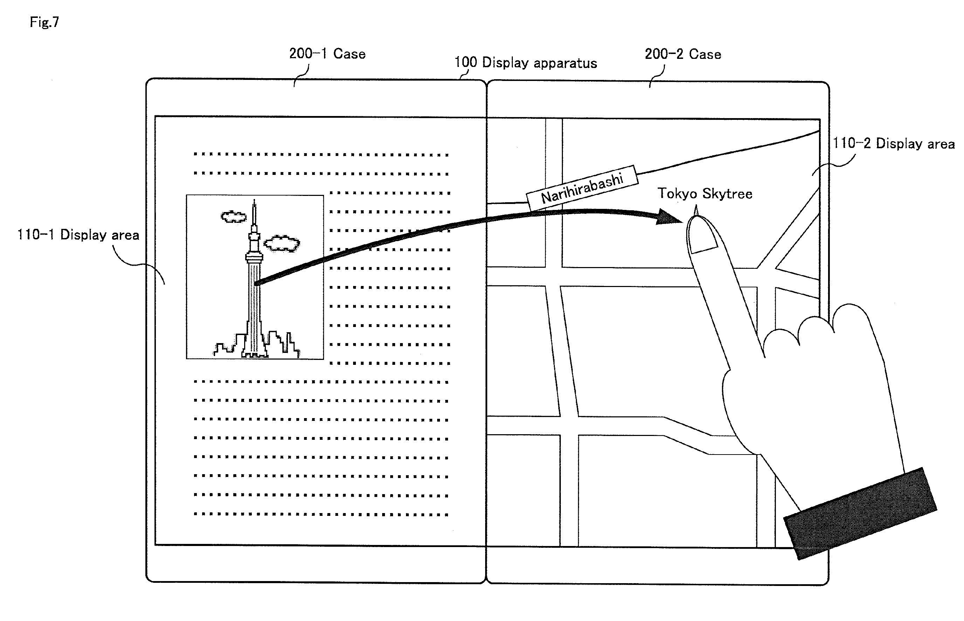

Figure 7 is a diagram showing an example of a state at the time when detection section 120 shown in Figure 1 detects end of the touch on display area 110-2.

As shown in Figure 7, when the operator operating display apparatus 100 slides his or her finger to display area 110-2 while keeping the finger touching display area 110-1, and then releasing the finger from display area 110-2, detection section 120 detects end of the touch, and control section 130 causes information related to Tokyo Skytree to be displayed at a position where the end of the touch has been detected. In the example shown in Figure 7, a map is displayed in display area 110-2 such that the position where detection section 120 has detected the end of the touch corresponds to the position of Tokyo Skytree on the map. Therefore, when the operator releases the finger that is touching a lower part of display area 110-2, from display area 110-2, detection section 120 detects end of the touch at the lower part of display area 110-2, and the map is displayed such that the position of Tokyo Skytree on the map is at the lower part of display area 110-2.

If display apparatus 100 is equipped with a function of acquiring current position information about display apparatus 100 such as a GPS (Global Positioning System) function, a map showing a positional relationship between the position of display apparatus 100 and the position of Tokyo Skytree may be displayed as the second information. At this time, the position of display apparatus 100 on the map is displayed at a position determined in display area 110-2, and the position of Tokyo Skytree on the map is displayed at a position where detection section 120 has detected the end of the touch.

The displayed map may be a general map, a map using an aerial photograph or display using a street view.

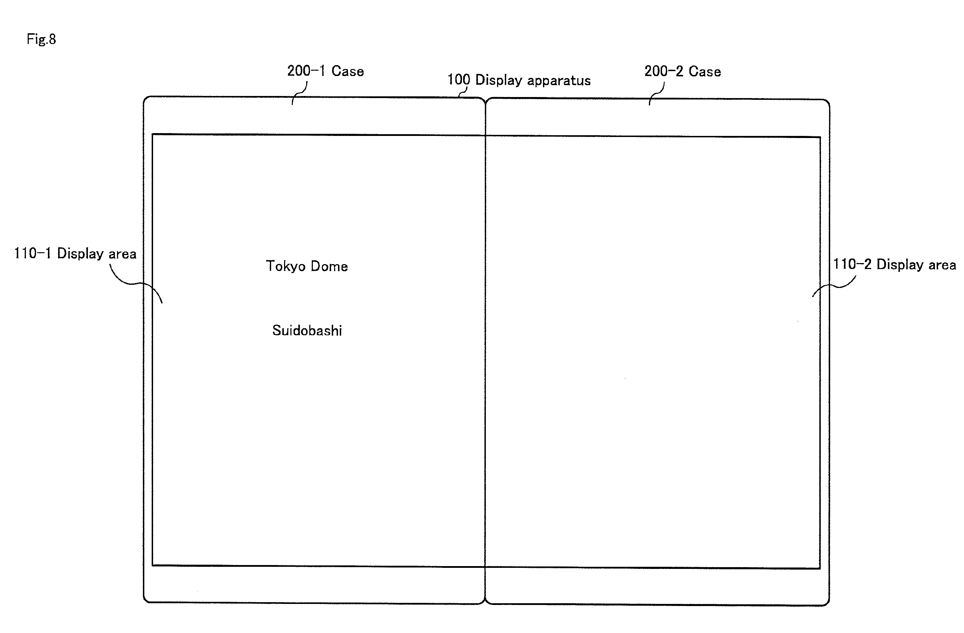

Figure 8 is a diagram showing an example of a state in which two pieces of information are displayed in display area 110-1 shown in Figure 1.

As shown in Figure 8, "Tokyo Dome" and "Suidobashi" are displayed in display area 110-1.

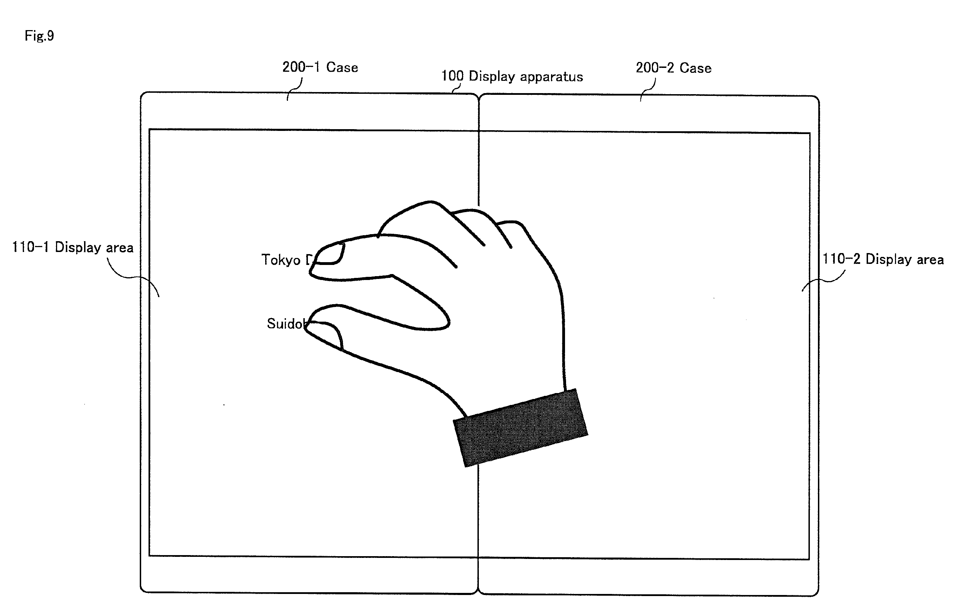

Figure 9 is a diagram showing an example of a state at the time when detection section 120 shown in Figure 1 detects start of the touch of two points in display area 110-1.

When detection section 120 detects start of touch at a position where "Tokyo Dome" is displayed and a position where "Suidobashi" is displayed in a state in which "Tokyo Dome" and "Suidobashi" are being displayed in display area 110-1 as shown in Figure 9, control section 130 searches for information showing a mutual relationship between "Tokyo Dome" and "Suidobashi." Here, as the information showing the mutual relationship between "Tokyo Dome" and "Suidobashi," for example, a map showing a positional relationship between Tokyo Dome and Suidobashi, information showing congestion states according to time zones at Suidobashi Station in the case where a professional baseball night game is held at Tokyo Dome, and the like are conceivable.

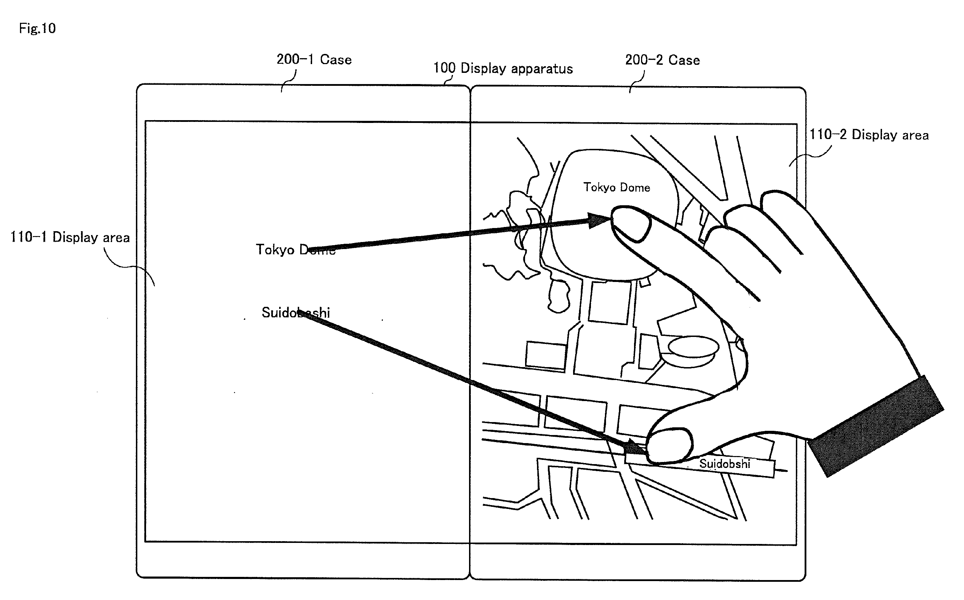

Figure 10 is a diagram showing an example of a state at the time when detection section 120 shown in Figure 1 detects end of the touch of the two points in display area 110-2.

As shown in Figure 10, when the operator operating display apparatus 100 slides two fingers to display area 110-2, while keeping the two fingers touching two points in display area 110-1 and then releasing the two fingers from display area 110-2, detection section 120 detects end of the touch of the two points, and control section 130 causes information showing a mutual relationship at positions of the two points where the end of the touch has been detected.

In Figure 10, a case in which control section 130 causes a map to be displayed in display area 110-2 is shown as an example. The map is displayed such that positions on the map related to the pieces of information displayed at the two points where detection section 120 has detected the start of the touch, respectively, are the positions of the two points where detection section 120 has detected the end of the touch. That is, in display area 110-2, the position of Tokyo Dome on the map is displayed at one point where detection section 120 has detected the end of the touch, and the position of Suidobashi Station on the map is displayed at the other one end where detection section 120 has detected the end of the touch.

By causing display to be performed as described above, it is shown that the distance between the two points at the end positions are extended in comparison with the distance between the two points at the start positions if the operator releases the two fingers from display area 110-2 in a state in which display area 110-2, that is being touched by two fingers, is opened wide, at the time of releasing the fingers from display area 110-2. Control section 130 causes the map to be displayed in display area 110-2 as a map whose size increases in accordance with this distance extension process and whose rate of extension is relative to the distance between the start positions. If the operator releases the two fingers from display area 110-2 in a state in which the distance between the two fingers, that are touching display area 110-2 is decreased, at the time when the fingers are released from display area 110-2, a map with a reduced scale is displayed.

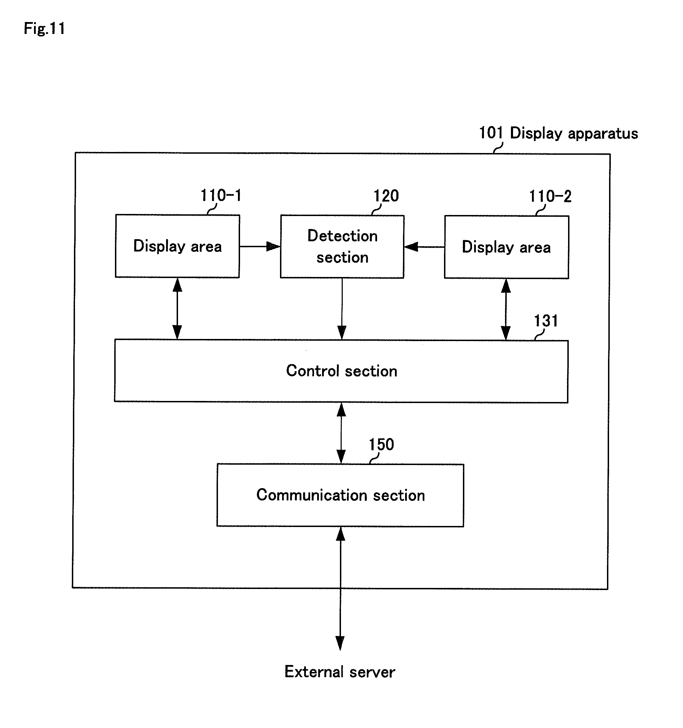

Figure 11 is a diagram showing a second exemplary embodiment of a display apparatus of the present invention.

Display apparatus 101 in the present exemplary embodiment is provided with display areas 110-1 and 110-2, detection section 120, control section 131 and communication section 150 as shown in Figure 11. Figure 11 shows only components related to the present invention among components provided for display apparatus 101. Although a case where there are two display areas is shown as an example in Figure 11, there may be three or more display areas.

Display areas 110-1 and 110-2 are the same as those shown in Figure 1.

Detection section 120 is the same as that shown in Figure 1.

Control section 131 does not search for and read out second information related to first information from storage section 140 like the first exemplary embodiment but acquires the second information from a predetermined external server connected to display apparatus 101 via communication section 150. The acquisition may be performed by searching for the second information on a search site or the like with the first information as a search key and acquiring related information about the first information from a server in which the retrieved second information is stored. Other functions provided for control section 131 are the same as the functions of control section 130 shown in Figure 1.

Communication section 150 performs communication with a predetermined external server connected to display apparatus 101. This predetermined server is a communication apparatus which is arranged at a site connected to a general communication network and in which various kinds of information are stored. Communication section 150 may perform communication not necessarily with one server but with multiple servers depending on information.

A display method in display apparatus 101 shown in Figure 11 will be described below.

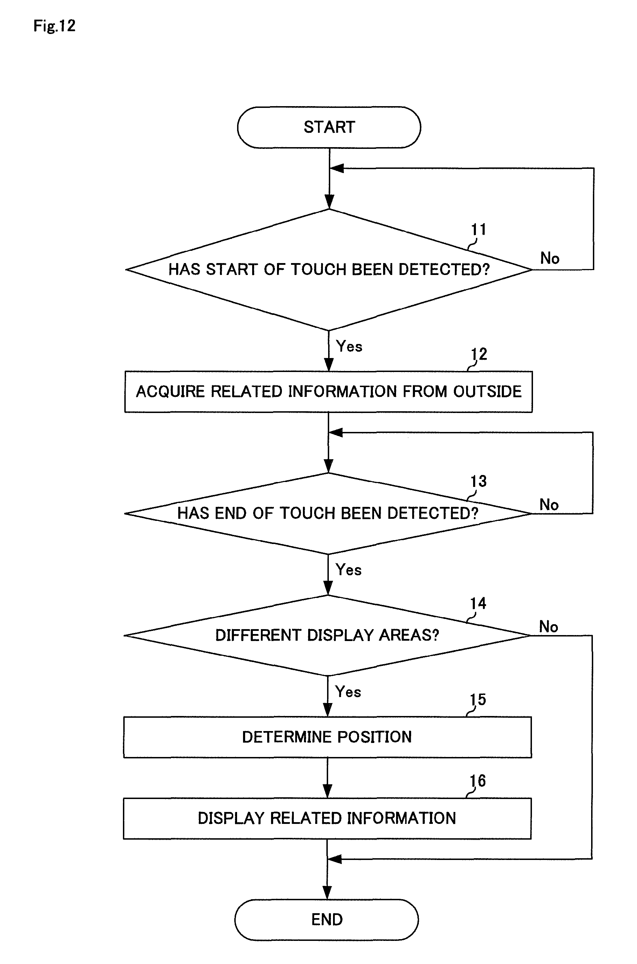

Figure 12 is a flowchart for illustrating the display method in display apparatus 101 shown in Figure 11.

First, at step 11, it is judged whether or not detection section 120 has detected start of touch of a touching object, such as a finger, in a display area.

If detection section 120 detects the start of the touch in the display area, control section 131 acquires, with first information displayed at a position corresponding to the position where the start of the touch has been detected as a search key, second information related to the first information from an external server or the like via communication section 150 at step 12.

After that, at step 13, it is judged whether or not detection section 120 has detected end of the touch. That is, detection section 120 judges whether or not the touching object, such as a finger, that touches the display area has left the display area.

If detection section 120 detects the end of the touch in the display area, control section 131 judges whether or not a position where the end of the touch has been detected is a position included in a display area that is different from the display area which includes the position where the start of the touch has been detected, at step 14.

If the position where detection section 120 has detected the end of the touch is not a position included in a display area that is different from the display area which includes the position where the start of the touch has been detected, the process ends without doing anything.

On the other hand, if the position where detection section 120 has detected the end of the touch is a position included in a display area that is different from the display area which includes the position where the start of the touch has been detected, control section 131 determines the position where detection section 120 has detected the end of the touch as a position where the second information is to be displayed, at step 15.

Then, at step 16, control section 131 causes the second information to be displayed at a position corresponding to the determined position.

The second information may be information corresponding to the first information and an action of an operation performed immediately before the touch action is completed.

For example, in the case where display apparatus 100 is provided with a communication function, and the touch operation described above is detected after a phone call or transmission/reception of an e-mail is performed, information related to first information displayed at a position corresponding to a position where detection section 120 has detected start of touch and information about a counterpart of the telephone call or transmission/reception of the e-mail may be the second information. Specifically, if detection section 120 detects start of touch, with the display position of first information "baseball" displayed in display area 110-1 within a predetermined period after the operator talked with Mr. A by telephone as a start position, and then detects end of the touch by the operator who releases his or her the finger from display area 110-2, control section 130 searches for information having both keywords "Mr. A" and "baseball" and outputs the information to display area 110-2. That is, information about a baseball club to which Mr. A belonged in his high school days, which is held in display apparatus 100, may be extracted and displayed as the second information at a position corresponding to an end position in display area 110-2. Though description has been made on the assumption that the information is stored in storage section 140, the information maybe information on a sever if the information is held or possessed by Mr. A.

As described above, it is possible to display information related to displayed information at a desired position or easily display information showing a mutual relationship among multiple pieces of information.

Display apparatuses 100 or 101 is applicable to apparatuses such as a mobile telephone, a mobile terminal, a tablet or notebook PC (Personal Computer), a smartphone, a PDA (Personal Digital Assistant), a game machine and an electronic book.

The process performed by each of the components provided for display apparatus 100 or 101 described above may be performed by each of logical circuits created according to purposes. A computer program in which process contents are written as a procedure (hereinafter referred to as a program) may be recorded in a recording medium readable by display apparatus 100 or 101, and the program recorded in the recording medium may be read into display apparatus 100 or 101 and executed. The recording medium readable by display apparatus 100 or 101 refers to a memory, such as a ROM and a RAM and an HDD, included in display apparatus 100 or 101, in addition to a removable recording medium, such as a floppy (registered trademark) disk, a magneto-optical disk, a DVD and a CD. The program recorded in the recording medium is read by control section 130 or 131 provided in display apparatus 100 or 101, and the processes similar to those described above are performed under the control of control section 13 0 or 131. Here, control section 130 or 131 operates as a computer which executes the program read in from the recording medium in which the program is recorded.

Although a part or all of the above exemplary embodiments can be described as the supplementary notes below, the present invention is not limited to those exemplary embodiments.

### (Supplementary note 1)

A display apparatus including:
mutually adjacent display areas;
a detection section that detects touch in the display areas; and
a control section that causes, if positions at start and end of the touch detected by the detection section are included in different display areas, second information related to first information displayed at a position corresponding to the position where the start of the touch is detected by the detection section, to be displayed at a position corresponding to the position where the end of the touch is detected by the detection section.

### (Supplementary note 2)

The display apparatus according to supplementary note 1, wherein
at the time of causing a map to be displayed as the second information in the display area where the end of the touch is detected by the detection section, the control section causes the map to be displayed such that a position on the map related to the first information is a position corresponding to the position where the end of the touch is detected.

### (Supplementary note 3)

The display apparatus according to supplementary note 1, wherein
if two positions of the start of the touch and two positions of the end of the touch are detected by the detection section, the control section causes information showing a mutual relationship between pieces of information displayed at positions corresponding to the two points where the start of the touch is detected by the detection section, to be displayed at positions corresponding to the positions where the end of the touch is detected by the detection section.

### (Supplementary note 4)

The display apparatus according to supplementary note 3, wherein
at the time of causing a map to be displayed as the second information in the display area where the end of the touch is detected by the detection section, the control section causes the map to be displayed such that display positions on the map that are related to the pieces of information displayed at the positions corresponding to the two points where the start of the touch is detected by the detection section, respectively, are positions corresponding to the positions of the two points where the end of the touch is detected by the detection section.

### (Supplementary note 5)

The display apparatus according to supplementary note 1, wherein
the control section causes the second information corresponding to the first information and the previous action.

### (Supplementary note 6)

The display apparatus according to any one of supplementary notes 1 to 5, including
a storage section that stores the first information and the second information in association with each other; wherein
the control section reads out the second information stored in association with the first information as information related to the first information and displays the second information.

The present invention has been described above with reference to exemplary embodiments. The present invention, however, is not limited to the above exemplary embodiments. Various changes that can be understood by one skilled in the art can be made in the configuration and details of the present invention within the scope of the present invention.

This application claims priority based on Japanese Patent Application No. 2011-208975 filed on September 26, 2011, the disclosure of which is hereby incorporated by reference thereto in its entirety.

## Claims

1. A display apparatus comprising:
mutually adjacent display areas;
a detection section that detects touch in said display areas; and
a control section that causes, if positions at start and end of the touch detected by said detection section are included in different display areas, second information related to first information displayed at a position corresponding to the position where the start of the touch is detected by said detection section, to be displayed at a position corresponding to the position where the end of the touch is detected by said detection section.

2. The display apparatus according to claim 1, wherein
at the time of causing a map to be displayed as the second information in said display area where the end of the touch is detected by said detection section, said control section causes the map to be displayed such that a position on the map related to the first information is a position corresponding to the position where the end of the touch is detected.

3. The display apparatus according to claim 1, wherein
if two positions at the start of the touch and two positions at the end of the touch are detected by said detection section, said control section causes information showing a mutual relationship between pieces of information displayed at positions corresponding to the two points where the start of the touch is detected by said detection section, to be displayed at positions corresponding to the positions where the end of the touch is detected by said detection section.

4. The display apparatus according to claim 3, wherein
at the time of causing a map to be displayed as the second information in said display area where the end of the touch is detected by said detection section, said control section causes the map to be displayed such that display positions on the map related to the pieces of information displayed at the positions corresponding to the two points where the start of the touch is detected by said detection section, respectively, are positions corresponding to the positions of the two points where the end of the touch is detected by said detection section.

5. The display apparatus according to any one of claims 1 to 4, comprising a storage section that stores the first information and the second information in association with each other, wherein
said control section reads out the second information stored in association with the first information as information related to the first information and causes the second information to be displayed.

6. A display method comprising the processes of:
detecting touch in mutually adjacent display areas; and
causing, if positions at start and end of the detected touch are included in different display areas, second information related to first information displayed at a position corresponding to the position where the start of the touch is detected, to be displayed at a position corresponding to the position where the end of the touch is detected.

7. A program for causing a display apparatus comprising mutually adjacent display areas to execute the procedures of:
detecting touch in the display area; and
causing, if positions at start and end of the detected touch are included in different display areas, second information related to first information displayed at a position corresponding to the position where the start of the touch is detected, to be displayed at a position corresponding to the position where the end of the touch is detected.
